# EUROPEAN PATENT APPLICATION

(11) **EP 4 644 264 A1**
(43) Date of publication of application: **05.11.2025**
(21) Application number: 22970059.6
(22) Date of filing: 27.12.2022
(51) Int. Cl.: B64U 10/14, B64U 101/40

(54) **FLYING BODY**

(71) Applicant: Kubota Corporation, Osaka 556-8601 (JP)
(72) Inventor: TAKAHASHI, Yusuke, Sakai-shi, Osaka 590-0908 (JP)
(74) Representative: Cabinet Beau de Loménie
(86) International application number: PCT/JP2022/048234
(87) International publication number: WO 2024/142266

(57) **Abstract**

A flying body includes: a body; a work device 15 connected to the body 2; a plurality of rotors 3 held by the body 2 and configured to rotate propellers 3C to generate lift; lift-changing mechanisms 23 provided for the rotors 3 and configured to change the direction of the lift; and a rotor controller 25 configured to control the lift-changing mechanisms 23, wherein the lift-changing mechanisms 23 are capable of changing the direction of the lift from the direction during flight while the work device 15 is performing work.

## Description

### Technical Field

The present invention relates to a flying body capable of performing work with a work device mounted thereon, and flying with rotors.

### Background Art

As shown in Patent Document 1, a flying body flies by generating (upward) lift against gravity with the use of rotors (propellers and motors). Some flying bodies are equipped with a work device (work equipment) and are capable of performing work on a work target while flying.

### Prior Art Document

### Patent Document

Patent Document 1: JP 2019-137251A

### Disclosure of the Invention

### Problem to be Solved by the Invention

There are cases where a work device needs to be appropriately pressed against a work target during work. In particular, when performing work on the ground or objects on the ground, the pressing force generated by the flying body's own weight is maximized. Therefore, there are cases where the force pressing the work device against the work target is insufficient and appropriate work cannot be performed. For example, depending on the hardness or unevenness of the ground, the flying body may rise upward against its own weight, resulting in insufficient tillage depth. Generally, the rotors of a flying body can generate upward or diagonally upward lift but cannot generate lift in the direction of gravity (downward).

The present invention aims to appropriately press a work device against a work target.

### Means for Solving Problem

To achieve the above aim, a flying body according to one embodiment of the present invention includes: a body; a work device connected to the body; a plurality of rotors held by the body and configured to rotate propellers to generate lift; lift-changing mechanisms provided for the rotors and configured to change the direction of the lift; and a rotor controller configured to control the lift-changing mechanisms, wherein the lift-changing mechanisms are capable of changing the direction of the lift from the direction during flight while the work device is performing work.

The flying body generates lift in a direction against gravity by using the rotors, and this lift allows the flying body to float and fly in the air. During flight, the flying body floats with lift in the opposite (upward) direction relative to the direction of gravity, and moves forward or backward with lift tilted from the direction of gravity to the horizontal direction (orthogonal to gravity) generated by tilting the airframe.

The work device performs work on various work targets. For example, the work device performs work on the ground or objects on the ground. In order to perform appropriate work with the work device, it may be necessary to press the work device against the work target or to adjust the pressing force.

With the above configuration, the rotors can be controlled to change the direction of the lift to be generated. When the work device is required to be pressed against the work target, such as the ground, the rotors can be controlled to change the direction of lift in such a manner as to include a lift vector directed in the direction of gravity. The work device can be pressed against the ground and the pressing force thereof can be adjusted by controlling the rotors to generate lift in the direction of gravity. Note that even when the work target is not the ground (not in the direction of gravity), it is possible to press the work device against the work target and adjust the pressing force by controlling the rotors to generate lift directed toward the work target.

The rotors may be held by the body so as to be respectively pivotable about pivot shafts extending in a direction intersecting a direction of gravity, and the lift-changing mechanisms may pivot the rotors about the respective pivot shafts.

The rotors can be tilted and the direction of the lift can be easily changed by pivoting the rotors about the pivot shafts extending in a direction intersecting the direction of gravity.

The rotor controller may be capable of changing the direction of the lift to the direction of gravity while the work device is performing work.

The work device can be strongly pressed against the ground by controlling the rotors to generate lift in the direction of gravity.

The lift-changing mechanisms may change the direction of rotation of the propellers.

The direction of the lift can be easily reversed by reversing the direction of rotation of the propellers.

The rotor controller may control the lift-changing mechanisms for a portion of the plurality of rotors.

With this configuration, the lift generated by a portion of the rotors can be used to press the work device against the work target, while the remaining rotors can be used to provide lift for purposes such as keeping the flying body aloft and controlling its attitude.

The rotor controller may be capable of controlling a magnitude of the lift.

With this configuration, the magnitude of the lift pressing the work device against the work target can be controlled, allowing the work device to be pressed against the work target with an appropriate force.

The flying body may further include a detector configured to detect a state of the work performed by the work device, wherein the rotor controller may control the lift-changing mechanisms based on a detection result from the detector.

Based on the detection result of the detected value, it is possible to determine how much the work device needs to be pressed against the work target. By controlling the rotors based on the detection result, the work device can be pressed against the work target with the necessary force.

The work device may be a tillage device, the detector may be a tillage depth detector configured to detect a tillage depth, and the rotor controller is capable of controlling the lift-changing mechanisms based on the tillage depth.

The tillage device needs to maintain a constant tillage depth. The tillage depth can be adjusted by adjusting the force pressing the tillage device. Therefore, by adjusting the direction of the lift and adjusting the force pressing the tillage device based on the tillage depth, the tillage depth can be kept constant.

The tillage depth detector may be a load detector configured to detect a mounting load of the tillage device corresponding to the tillage depth, and the rotor controller may control the lift-changing mechanisms based on the mounting load.

The tillage depth corresponds to the load on the tillage device received from the ground, and the load on the tillage device can be measured based on the load applied to the tillage device, that is, the mounting load applied to the tillage device. Therefore, by adjusting the direction of the lift based on the mounting load and adjusting the force pressing the tillage device, the tillage depth can be kept constant.

The tillage depth detector may be a range sensor configured to measure a distance to a ground, and the rotor controller may calculate the tillage depth based on the distance to the ground.

The tillage depth can be calculated by subtracting the distance from the range sensor to the ground, from the distance from the range sensor to the lower end of the tillage device. Therefore, by adjusting the direction of the lift based on the tillage depth obtained based on the distance from the range sensor to the ground, and adjusting the force pressing the tillage device, the tillage depth can be kept constant.

The tillage depth detector may be an imaging device, and the rotor controller may obtain the tillage depth based on an image captured by the imaging device.

The tillage depth can be easily obtained by analyzing captured images. Therefore, by adjusting the direction of the lift based on the tillage depth obtained from the captured images and adjusting the force pressing the tillage device, the tillage depth can be easily kept constant.

### Brief Description of the Drawings

FIG. 1 is a plan view illustrating the configuration of a flying body.
FIG. 2 is a diagram illustrating the configurations of the flying body and a work device during work.
FIG. 3 is a diagram illustrating a rotor and lift during flight.
FIG. 4 is a diagram illustrating the rotor and lift during work.
FIG. 5 is a diagram illustrating the configuration of the flying body to which a work machine is connected.

### Best Mode for Carrying out the Invention

Hereinafter, a drone, which is an example of a flying body according to the present embodiment equipped with a work device, will be described with reference to the drawings. In the drawings, the direction indicated by U is upward, and the direction indicated by D is downward.

### (Overall Configuration)

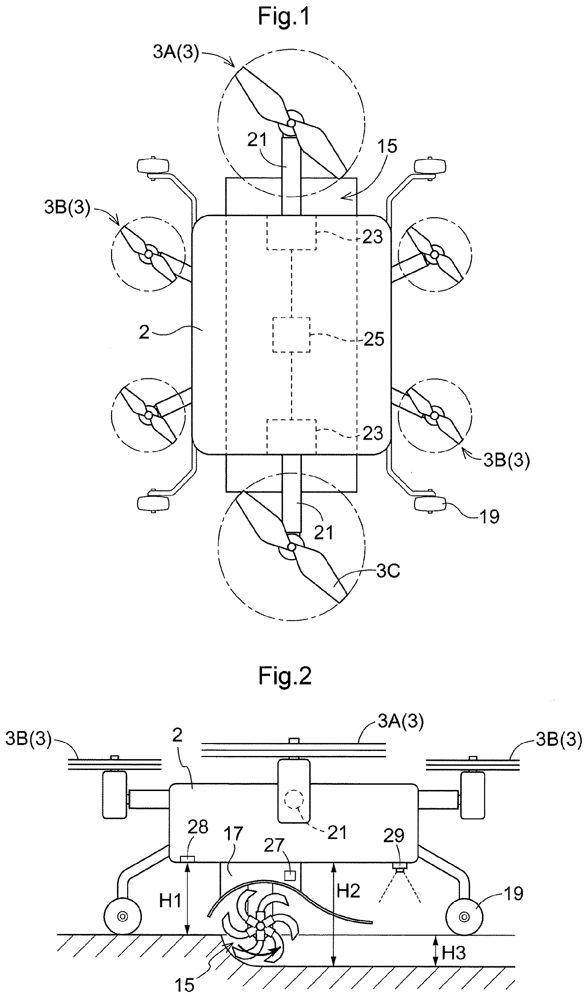

As shown in FIGS. 1 and 2, the drone includes a body 2 and a plurality of rotors 3. The rotors 3 include main rotors 3A that generate lift and sub-rotors 3B that perform attitude control. The illustrated drone exemplifies a configuration with two main rotors 3A and four sub-rotors 3B.

In the drone according to the present embodiment, a work device is connected to the body 2 with a support 17 interposed therebetween. The drone according to the present embodiment can be equipped with any work device, but in the following description, a drone equipped with a tillage device 15 as the work device will be described as an example.

For example, the tillage device 15 is suspended downward from the body 2 by the support 17 disposed below the body 2.

The drone also includes wheels 19 held by the body 2. The wheels 19 contact the ground when the tillage device 15 performs work on the ground, which is the work target, to support the drone on the ground and assist the tillage device 15 in working on the ground in a stable manner. Each wheel 19 is held by the body 2 with a holding member having predetermined elasticity so that the distance between the contact portion of the wheel 19 and the lower end of the body 2 can be changed within a predetermined range.

In the drone, the support 17 includes a load detector 27 that detects the mounting load of the tillage device 15. The load detector 27 functions as a detector that detects the state of the work performed by the work device. As a tillage depth H3 of the tillage device 15 increases, the mounting load on the support 17 increases, and as the tillage depth H3 decreases, the mounting load on the support 17 decreases.

The load detector 27 is configured to detect the mounting load that the support 17 receives from the tillage device 15. Since the mounting load corresponds to the tillage depth H3, the load detector 27 also functions as a tillage depth detector. In other words, the load detector 27 can be said to detect the tillage depth H3.

### (Rotor Pivot Configuration)

As shown in FIG. 1, the main rotors 3A are each pivotable about a pivot shaft 21 and are held by the body 2. Each pivot shaft 21 is a shaft extending from the body 2 in a direction intersecting an up-down direction with respect to the drone (in a direction intersecting the direction parallel to gravity).

The main rotors 3A are pivoted by lift-changing mechanisms 23 controlled by a rotor controller 25. In other words, the lift-changing mechanisms 23 pivot (tilt) the main rotors 3A under the control of the rotor controller 25 to change the direction of lift.

The rotor controller 25 acquires the mounting load detected by the load detector 27 as a detection result and causes the lift-changing mechanisms 23 to pivot the main rotors 3A based on the mounting load. When the mounting load is less than a predetermined value, the rotor controller 25 determines that the tillage depth H3 is less than a predetermined depth and pivots the main rotors 3A, as described below, so that the main rotors 3A generate lift in such a direction as to increase the tillage depth H3.

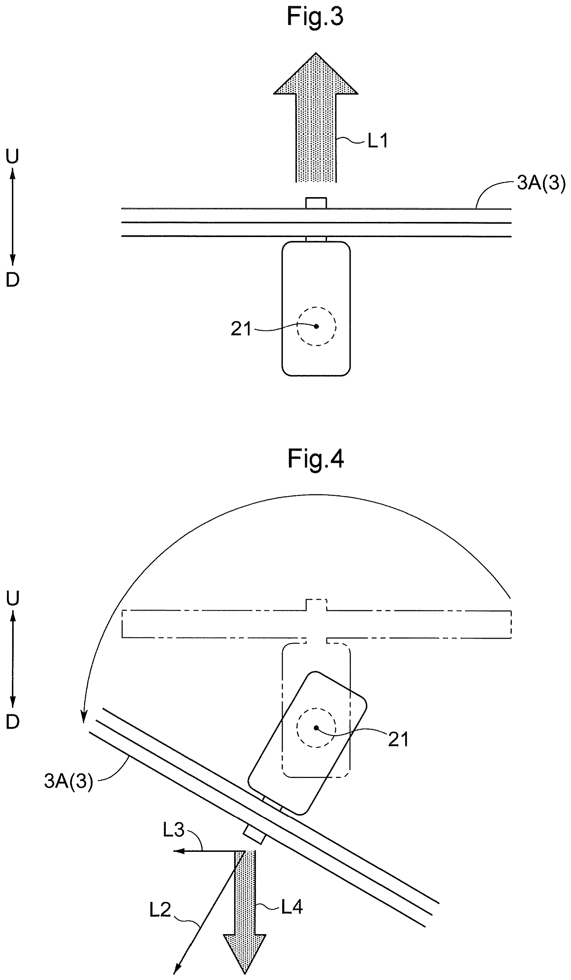

As shown in FIG. 3, during flight, the main rotors 3A are in a horizontal state and generate lift L1 in the direction against gravity (upward). In other words, when the main rotors 3A are in a horizontal state, the normals to the rotation surface of propellers 3C are in the up-down direction (parallel to gravity), and the upward lift L1 is generated.

As shown in FIG. 4, when the main rotors 3A are pivoted about the pivot shafts 21 in a range greater than 90° and less than 270° relative to the horizontal state, lift L4 (downforce) is generated from the main rotors 3Ain the downward direction (in the direction of gravity). In other words, as a result of the main rotors 3A being pivoted, the direction of the lift generated by the main rotors 3A is changed from the direction during flight.

For example, when the main rotors 3A are pivoted by 180° about the pivot shafts 21 relative to the horizontal state, the main rotors 3A invert from the horizontal state during flight to the opposite horizontal state, and the main rotors 3A generate lift L4 in the direction opposite to the lift L1 (in the direction of gravity) with the same magnitude. In other words, when the main rotors 3A are pivoted in a range greater than 90° and less than 270°, lift L2 is generated. This lift L2 can be decomposed into lift L3 in the horizontal direction and the lift L4 in the downward direction (in the direction of gravity). While the lift L4 presses the tillage device 15 against the ground, the drone can use the lift L3 as propulsion to perform work travel.

As a result of the lift L4 generated in the downward direction (in the direction of gravity), the tillage device 15 is pressed against the ground, which is the work target.

As shown in FIGS. 1 and 4, when the mounting load is less than a predetermined value, the rotor controller 25 determines that the tillage depth H3 is less than the predetermined depth and pivots the main rotors 3A. As a result, the lift L1 during flight is changed to the lift L4 in the downward direction (in the direction of gravity), and the tillage device 15 is pressed against the ground, which is the work target. Consequently, the tillage device 15 can till the ground more deeply to increase the tillage depth H3.

Note that the rotor controller 25 preferably causes the lift-changing mechanisms 23 to pivot the main rotors 3A by an angle that is based on the mounting load corresponding to the tillage depth H3. Thus, the smaller the tillage depth H3 is relative to the predetermined depth, the closer to 180° the angle by which the main rotors 3A are pivoted is, thereby enabling the tillage device 15 to be pressed against the ground with an appropriate force. As a result, tillage work can be performed at the constant tillage depth H3.

### (Other Embodiments)

(1) In the above embodiment, the rotor controller 25 may be configured to change the magnitude of the lift generated by the rotors 3. For example, the rotor controller 25 may adjust the output (lift) of the main rotors 3A based on the mounting load detected by the load detector 27 by adjusting the number of revolutions, rotation speed, and the like of the main rotors 3A while changing the direction of the lift generated by the main rotors 3A.
   With this configuration, the force with which the tillage device 15 presses against the ground can be more precisely controlled. In particular, the magnitude of the lift L4 for pressing the tillage device 15 against the ground and the magnitude of the lift L3 for propelling the drone can be easily controlled to be optimal.
(2) In each of the above embodiments, only the main rotors 3A may pivot about their pivot shafts 21 to change the direction of lift, but at least one of the main rotors 3A and sub-rotors 3B may pivot about their pivot shafts 21 to change the direction of the lift. In this case, it is preferable to pivot whichever of the rotors 3, i.e., the main rotors 3A or the sub-rotors 3B, exhibits better responsiveness, to change the lift direction. Furthermore, at least one of the plurality of rotors 3, i.e., the main rotors 3A or the sub-rotors 3B, may be pivoted about the pivot shafts 21 to change the direction of lift. In other words, one of the rotors 3 may generate the lift L4 to press the tillage device 15 against the ground, while another may generate propulsion or perform attitude control for other effects. For example, when a large lift is required to control the tillage device 15, the energy distribution between the rotors 3 (the main rotors 3A) for hovering (ascending, descending, and propulsion) and the rotors 3 (the sub-rotors 3B) for attitude control may be changed to increase the energy for the rotors 3 for attitude control, while lowering the hovering altitude. This allows the force pressing the tillage device 15 against the ground, the propulsion of the drone, and the attitude control force of the drone to be adjusted easily and precisely.
(3) In each of the above embodiments, a configuration for changing the direction of lift by reversing the direction of rotation of the propellers 3C of the main rotors 3A (rotors 3) may be employed instead of the configuration for changing the direction of lift by pivoting the main rotors 3A (rotors 3). In other words, the lift-changing mechanisms 23 reverse the direction of rotation of the propellers 3C under the control of the rotor controller 25. This allows the direction of lift to be changed with a simple and easy configuration. Additionally, by controlling the number of revolutions and rotation speed of the propellers 3C in addition to the direction of rotation of the propellers 3C, the rotor controller 25 can more precisely control the force with which the tillage device 15 presses against the ground. Note that this is not limited to the main rotors 3A, and the direction of rotation of the propellers 3C of the sub-rotors 3B may be reversed instead of the propellers 3C of the main rotors 3A or in addition to the propellers 3C of the main rotors 3A.
(4) In each of the above embodiments, instead of employing the configuration for pivoting the main rotors 3A (rotors 3) to change the direction of lift, the direction of lift may be changed by changing the mounting angle of the propellers 3C of at least one type of rotors (rotors 3), i.e., either the main rotors 3A or the sub-rotors 3B. In this case, the propellers 3C are held in such a manner as to be able to change the mounting angle thereof, and the lift-changing mechanisms 23 change the mounting angle of the propellers 3C based on instructions from the rotor controller 25. This allows the direction of lift to be changed with a simple and easy configuration.
(5) In each of the above embodiments, the drone may include a range sensor 28 as a tillage depth detector (detector) instead of the load detector 27.

During tillage work, the range sensor 28 measures a distance H1 from the body 2 (the range sensor 28) to the ground and passes the measured distance H1 to the rotor controller 25. Here, a distance H2 from the body 2 (the range sensor 28) to the lower end of the tillage device 15 fixed to (held by) the body 2 is known in advance. Therefore, the rotor controller 25 can calculate the tillage depth H3 by subtracting the distance H1 from the distance H2.

The rotor controller 25 changes the direction of lift by pivoting the main rotors 3A (rotors 3), changing the direction of rotation of the propellers 3C, or changing the mounting angle of the propellers 3C based on the tillage depth H3.

Thus, the tillage depth H3 can be obtained more precisely, and the tillage device 15 can be pressed against the ground based on the tillage depth H3.

The range sensor 28 may be a LiDAR (light detection and ranging) sensor, an ultrasonic sensor (sonar), or the like.

(6) In each of the above embodiments, the drone may include an imaging device 29 as a tillage depth detector (detector) instead of the load detector 27.

The imaging device 29 captures images of the ground subjected to tillage work or the tillage device 15 and the ground during tillage work and passes the captured images to the rotor controller 25. The rotor controller 25 analyzes the received images to obtain the tillage depth H3.

The rotor controller 25 changes the direction of lift by pivoting the main rotors 3A (rotors 3), changing the direction of rotation of the propellers 3C, or changing the mounting angle of the propellers 3C based on the tillage depth H3.

As a result, the tillage depth H3 can be obtained more easily, and the tillage device 15 can be pressed against the ground based on the tillage depth H3.

(7) In each of the above embodiments, the work device is not limited to the tillage device 15, but may be any work device, such as a mowing device or other agricultural machine, or any device performing various types of work, such as cleaning. In such cases, detectors such as the load detector 27 and the range sensor 28 may use various detection methods to detect load or height (distance) depending on the type of work. For example, in a mower, detectors may detect the resistance corresponding to the height of the grass or the resistance from pebbles during mowing as a load, and adjust the height of the grass. In a transplanting machine, detectors may detect planting depth or field hardness, and in a harvesting machine, detectors may detect grain cutting height or blockage by pebbles or the like. In the case of cleaning, detectors may use image recognition to detect dirt and identify areas to be cleaned. Furthermore, the work device is not limited to being suspended downward from the body 2, but may be held in any direction from the body 2. The lift can be changed to any direction as needed, and the work device can be pressed against the work target.

(8) In each of the above embodiments, the positions at which the lift-changing mechanisms 23 and the rotor controller 25 are disposed are not limited to the positions shown in FIG. 1, and may be any positions.

(9) In each of the above embodiments, the drone may include an engine 11 as a power source. Furthermore, the drone may include a generator 12 in addition to the engine 11. The generator 12 generates electricity by using the power output from the engine 11. The drone may also include a battery 13, and the electricity generated by the generator 12 may be stored in the battery 13. The rotors 3 and the work device are driven by the power generated by the engine 11, the electricity generated by the generator 12, or the electricity stored in the battery 13. For example, either the main rotors 3A, the sub-rotors 3B, or the work device operates with the power from the engine 11, while the others operate with the electricity generated by the generator 12 or the electricity stored in the battery 13.

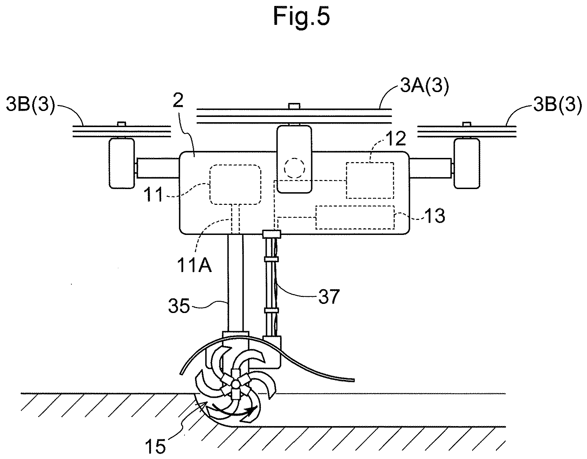

Note that when power is transmitted from the engine 11 as shown in FIG. 5, the drone may include, in the body 2, a PTO shaft 35 connected to a drive shaft 11A of the engine 11 so that power is output from the PTO shaft 35. The work device receives power from the PTO shaft 35. When electricity is to be transmitted, the drone includes a power cable 37. The work device receives electricity from the drone via the power cable 37. Also, the engine 11 may use, as fuel, fossil fuels such as gasoline and diesel (light oil), hydrogen, biofuel, and the like.

(10) In each of the above embodiments, the work device may be integrated with the drone, but as shown in FIG. 5, the work device may be connected to the drone. The work device may also be connected at a distance from the body 2 (airframe) of the drone. In this case, at least either the PTO shaft 35 or the power cable 37 is provided in such a manner as to protrude from the airframe and is connected to the work device.

(11) In each of the above embodiments, the flying body is not limited to a drone but may be any flying body equipped with rotors 3 and capable of mounting a work device.

### Industrial Applicability

The present invention is applicable to a flying body capable of performing work with a work device mounted thereon, and flying with rotors.

### Description of Reference Signs

2: Body
3: Rotor
3C: Propeller
15: Tillage Device (Work Device)
21: Pivot shaft
23: Lift-Changing Mechanism
25: Rotor Control Unit
27: Load Detector (Tillage Depth Detector / Detector)
28: Distance-Measuring Sensor (Tillage Depth Detector / Detector)
29: Imaging Device (Tillage Depth Detector / Detector)
H1: Distance
H3: Tillage Depth

## Claims

1. A flying body comprising:
a body;
a work device connected to the body;
a plurality of rotors held by the body and configured to rotate propellers to generate lift;
lift-changing mechanisms provided for the rotors and configured to change a direction of the lift; and
a rotor controller configured to control the lift-changing mechanisms,
wherein the lift-changing mechanisms are capable of changing the direction of the lift from the direction during flight while the work device is performing work.

2. The flying body according to claim 1,
wherein the rotors are held by the body so as to be respectively pivotable about pivot shafts extending in a direction intersecting a direction of gravity, and
the lift-changing mechanisms pivot the rotors about the respective pivot shafts.

3. The flying body according to claim 1 or 2,
wherein the rotor controller is capable of changing the direction of the lift to the direction of gravity while the work device is performing work.

4. The flying body according to claim 1,
wherein the lift-changing mechanisms change the direction of rotation of the propellers.

5. The flying body according to any one of claims 1 to 4,
wherein the rotor controller controls the lift-changing mechanisms for a portion of the plurality of rotors.

6. The flying body according to any one of claims 1 to 5,
wherein the rotor controller is capable of controlling a magnitude of the lift.

7. The flying body according to any one of claims 1 to 6, further comprising:
a detector configured to detect a state of the work performed by the work device,
wherein the rotor controller controls the lift-changing mechanisms based on a detection result from the detector.

8. The flying body according to claim 7,
wherein the work device is a tillage device,
the detector is a tillage depth detector configured to detect a tillage depth, and
the rotor controller is capable of controlling the lift-changing mechanisms based on the tillage depth.

9. The flying body according to claim 8,
wherein the tillage depth detector is a load detector configured to detect a mounting load of the tillage device corresponding to the tillage depth, and
the rotor controller controls the lift-changing mechanisms based on the mounting load.

10. The flying body according to claim 8,
wherein the tillage depth detector is a range sensor configured to measure a distance to a ground, and
the rotor controller calculates the tillage depth based on the distance to the ground.

11. The flying body according to claim 8,
wherein the tillage depth detector is an imaging device, and
the rotor controller obtains the tillage depth based on an image captured by the imaging device.
